**Europäisches Patentamt**

**European Patent Office**

**Office européen des brevets**

(19)

(11) Veröffentlichungsnummer: **0 075 706**
**B1**

(12) # EUROPÄISCHE PATENTSCHRIFT

(45) Veröffentlichungstag der Patentschrift:
08.04.87

(51) Int. Cl.⁴: **G 02 F 1/133**, G 02 F 1/01

(21) Anmeldenummer: **82107424.2**

(22) Anmeldetag: **16.08.82**

(54) **Elektrooptisches Anzeigeelement sowie Verfahren zum Herstellen elektrooptischer Anzeigeelemente.**

(30) Priorität: **26.09.81 DE 3138373**

(43) Veröffentlichungstag der Anmeldung:
**06.04.83 Patentblatt 83/14**

(45) Bekanntmachung des Hinweises auf die Patenterteilung:
**08.04.87 Patentblatt 87/15**

(84) Benannte Vertragsstaaten:
**FR GB NL SE**

(56) Entgegenhaltungen:
**EP-A-0 022 279**
**DE-A-2 322 826**
**FR-A-2 290 762**
**FR-A-2 399 704**
**US-A-3 682 700**
**US-A-3 966 302**

**TOUTE L'ELECTRONIQUE, Nr. 446,**
**August/September 1979, Seiten 25-30, Paris, FR; M.**
**MONNIER: "Circuiterie sur film polyimide"**

(73) Patentinhaber: **VDO Adolf Schindling AG,**
**Gräfstrasse 103, D-6000 Frankfurt/Main (DE)**

(72) Erfinder: **Baeger, Holm, Dr., Salzbornstrasse 1,**
**D-6231 Schwalbach (DE)**

(74) Vertreter: **Könekamp, Herbert, Dipl.- Ing., Sodener**
**Strasse 9, D-6231 Schwalbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren zum Herstellen elektrooptischer Anzeigeelemente, insbesondere von Flüssigkristalldisplays, bei dem auf ein Glassubstrat eine elektrisch leitfähige Schicht und darauf eine Isolierschicht aufgebracht wird, die zuerst einem Trockenprozess und anschließend einem Einbrennprozeß unterworfen wird und die, im Bereich von Kontaktierungsstellen der leitfähigen Schicht zur Ermöglichung dieser Kontaktierung behandelt wird.

Bekanntlich werden bei einer Vielzahl elektrooptischer Anzeigen, beispielsweise bei nematischen, dichroitischen oder Dipolsuspensionsanzeigen die auf dem vorderen oder hinteren Glassubstrat aufgebrachten leitfähigen Schichten mit einer Isolierschicht überdeckt, um zu verhindern, daß die leitfähige Schicht durch elektrolytische Prozesse während des Betriebs des Anzeigeelements zersetzt werden. Die Verfahrensweise ist dabei derart, daß nach dem Aufbringen und Strukturieren der leitfähigen Schicht die Isolierschicht durch Tauchen, Schleudern oder rollercoaten aufgebracht wird. Nach dem Aufbringen wird die Isolierschicht bei niedrigen Temperaturen einem kurzen Trocknungsprozeß unterworfen und anschließend wird sie bei Temperaturen von ca. 400°C eingebrannt. Nach Abschluß des Einbrennprozesses wird die Isolierschicht im Bereich der Kontaktierungsstellen der leitfähigen Schicht, an denen später die Anschlüsse für die Steuerleitungen angeschlossen werden, entfernt, was durch Freikratzen oder Freiätzen der Kontaktstellen erfolgt. Dieses Freikratzen oder Freiätzen der Kontaktstellen ist sehr zeitaufwendig und mit großen Ausfallrisiken verbunden. Zudem läßt sich der Freiätz-oder Freikratzvorgang nur unter erheblichen Schwierigkeiten und großem technischen Aufwand automatisieren.

Es ist auch bereits vorgeschlagen worden, die leitfähigen Schichten nicht vollständig mit einer Isolierschicht zu überziehen, sondern sie an den Kontaktstellen beschichtungsfrei zu lassen. Da das Beschichten der leitfähigen Schichten mit der isolierenden Substanz, beispielsweise Siliziumoxyd, Siliziumdioxyd oder auch Yttriumoxyd, im Offset-Verfahren erfolgt, ist für jedes Display eine umfangreiche Umrüstung der Beschichtungsanlage erforderlich, was sich nachteilig auf die Flexibilität der Displayfertigung auswirkt und die Fertigungskosten in die Höhe treibt. Dem Aufbringen der Schichten im Siebdruckverfahren wohnen diese Nachteile nicht inne, jedoch ist ein solches Siebdruckverfahren in Verbindung mit den Isolierschichten technisch sehr problematisch und aus diesem Grund bis heute nicht in der Großserienfertigung realisiert worden.

Aus der FR-A-23 99 704 ist eine Flüssigkristallzelle bekannt, bei der auf ein Glassubstrat eine elektrisch leitfähige Schicht und darauf eine Isolierschicht aufgebracht ist.

Weiterhin ist aus der DE-A-23 22 826 ein Verfahren zur Ausbildung eines transparenten elektrisch leitfähigen Filmmusters bekannt, bei dem zuerst eine Paste mit einem durch Erhitzen zersetzbaren Hilfsstoff und anorganische Oxydteilchen an den Stellen auf ein Substrat aufgebracht, die später frei von einem elektrisch leitenden Film sein sollen.

Anschließend wird ein zu dem transparenten elektrisch leitfähigen Metalloxyd oxydierbares Material niedriger Oxydationsstufe aufgedampft und das gesamte Substrat in sauerstoffhaltiger Atmosphäre erhitzt, so daß das Material niedriger Oxydationsstufe oxydiert und der Hilfsstoff zersetzt wird.

Die Nachteile der bekannten Verfahren sollen durch die Erfindung überwunden werden. Es ist daher Aufgabe der Erfindung ein Herstellverfahren zu konzipieren, das die Freilegung bzw. Freihaltung der Kontaktierungsstellen der leitfähigen Schicht von dem isolierenden Überzug ohne großen Aufwand gestattet. Zudem soll das Verfahren so ausgebildet sein, daß es mit einem möglichst geringen technischen Aufwand automatisierbar ist.

Diese Aufgabe wird erfindungsgemäß dadurch gelöst, daß nach dem Trockenprozeß im Bereich der Kontaktierungsstellen auf die Isolierschicht eine sich unter Wärmeeinwirkung zersetzende Substanz aufgebracht wird, die mindestens eine in die Isolierschicht eindringende Zersetzungskomponente aufweist, und danach der Einbrennprozeß durchgeführt wird.

Die Erfindung geht hierbei von der Erkenntnis aus, daß nach dem Trockenprozeß die Isolierschicht noch sehr porös ist. Wird nun in diese poröse Isolierschicht eine wie auch immer geartete Substanz eingebracht und danach der Einbrennprozeß durchgeführt, so können sich die einzelnen Poren in der Isolierschicht nicht schließen. Dieser Effekt, der sich auf die Haftfestigkeit des porösen Teils der Isolierschicht an der leitenden Schicht auswirkt kann zur Weiterbehandlung dieses Schichtteils in vorteilhafter Weise ausgenutzt werden und zwar entweder bei der Entfernung dieses Schichtteils oder bei der Nutzung des Schichtteils als Träger für einen leitenden Werkstoff.

In einer bevorzugten Ausführungsform der Erfindung wird als sich zersetzende Substanz eine metallorganische Verbindung aufgebracht, von der mindestens eine Metallkomponente in die Isolierschicht eindringen kann. Bei dieser Ausführungsform wird also die poröse Isolierschicht als Träger für eine elektrisch leitende Metallkomponente der Substanz benutzt, die während des Einbrennprozesses in die Poren der Isolierschicht diffundieren kann und, da die Poren miteinander in Verbindung stehen, somit eine elektrisch leitende Brücke zwischen der der leitenden Schicht benachbarten Schichtseite der Isolierschicht und der anderen Isolierschichtseite bildet. Das freie Ende dieser Brücke kann dann zur Kontaktierung von irgendwelchen Anschlußdrähten benutzt werden. Zur Erzielung einer wenig aufwendigen und schnell durchführbaren Verbindung der Anschlußdrähte mit dem freien Ende der leitenden Brücke empfiehlt es sich, eine metallorganische Verbindung mit einer in die Isolierschicht eindringenden lätfähigen Metallkomponente, wie beispielsweise Kupfer oder Gold, aufzubringen. Als metallorganische Verbindung, die für die vorliegenden Zwecke geeignet ist, kommt beispielsweise ein Dimethylgoldhalogenid in Betracht.

Gemäß einer anderen vorteilhaften Ausführungsform der Erfindung wird als sich zersetzende Substanz eine organische Verbindung aufgebracht, von der mindestens eine Komponente in die Isolierschicht eindringen kann und während des Einbrennprozesses elektrisch leitend wird. Eine derartige Substanz kann beispielsweise Polyvinylalkohol sein, der sich während des Einbrennprozesses zumindest teilweise in Kohlenstoff umwandelt. Die elektrisch leitende Brücke besteht bei dieser Ausführungsform also aus Kohlenstoff.

Die Kontaktierung der Displays kann dann in üblicher Weise über Leitgummi erfolgen.

Gemäß einer weiteren vorteilhaften Ausführungsform der Erfindung wird eine während des Einbrennprozesses zumindest teilweise verdampfende oder verbrennende organische Substanz aufgebracht und nach dem Einbrennprozeß wird die mit der Zersetzungskomponente versehene Isolierschicht entfernt. Bei einem solchen Verfahrensschritt wird also nicht wie bei den vorher beschriebenen Verfahren eine Brücke aus einem leitfähigen Material erhalten, vielmehr wird durch die zumindest teilweise verdampfende oder verbrennende Substanz lediglich verhindert, daß an der Stelle, an der die zumindest teilweise verdampfende oder verbrennende organische Substanz in die Poren des Isolierstoffs eingebracht ist, eine größere Haftwirkung zwischen der porösen Schicht und der leitfähigen Schicht entstehen kann, so daß nach dem Einbrennprozeß der porös gebliebene Teil der Schicht durch Bürsten oder mit Ultraschall leicht entfernt werden kann. Wie sich gezeigt hat, lassen sich besonders gute Ergebnisse, d.h. besonders geringe Verdichtungen der Isolierschicht im Bereich der aufgebrachten Substanz erreichen, wenn eine rückstandsfrei verdampfende organische Substanz aufgebracht wird. Durch das Nichtvorhandensein von irgendwelchen Rückständen werden nämlich die einzelnen Porenwände in ihrer Dicke nicht vergrößert, so daß sich dieser Teil der Isolierschicht besonders leicht und sauber entfernen läßt. Für dieses Verfahren kann beispielsweise eine Zelluloseverbindung, wie Nitrozellulose verwendet werden.

Die Erfindung bezieht sich des weiteren auf ein elektrooptisches Anzeigeelement, insbesondere ein Flüssigkristalldisplay, mit zwei mit Abstand zueinander angeordneten Glassubstraten, auf denen sich jeweils eine elektrisch leitfähige Schicht, eine Isolierschicht und gegebenenfalls eine Orientierungsschicht und zwischen denen sich eine Flüssigkeit mit sich im elektrischen Feld ausrichtenden Kristallen befindet, sowie mit mit Kontaktierungsstellen der leitfähigen Schicht in Verbindung stehenden elektrischen Anschlußelementen.

Derartige Anzeigeelemente sind grundsätzlich· bekannt und haben den Nachteil, daß sie mit den eingangs beschriebenen, bekannten Verfahren nur mit einem verhältnismäßig großem Aufwand herstellbar sind. Zur Vereinfachung des Herstellungsaufwandes sind nun gemäß der Erfindung im Bereich jeder Kontaktierungsstelle die Poren der Isolierscnicht mit einer elektrisch leitfähigen Zersetzungskomponente einer unter Wärmeeinwirkung zersetzlichen Substanz gefüllt, die einerseits mit der Kontaktierungsstelle und andererseits mit dem Anschlußelement in Verbindung steht.

Die Füllung der Poren der Isolierschicht im Bereich einer Kontaktierungsstelle kann mit dem weiter oben beschriebenen Verfahren realisiert werden. Es sind jedoch zur Füllung der Poren der Isolierschicht im Bereich der einzelnen Kontaktierungsstellen noch andere Verfahren denkbar. So besteht die Möglichkeit, die Poren unter Anwendung von Druck mit einer elektrisch leitenden Substanz zu füllen, oder unter Anwendung von Vakuum auf die einer Kontaktierungsstelle benachbarten Teile der Isolierschicht.

Als vorteilhaft hat es sich erwiesen, die Poren mit einer zersetzlichen Substanz aus einem Dimethylgoldhalogenid zu füllen. Mit einer solchen Substanz lassen sich besonders gute Ergebnisse hinsichtlich der Kontaktierung der Substanz einerseits mit der leitfähigen Schicht und andererseits mit dem Anschlußdraht erzielen.

Die Erfindung sei anhand der Zeichnung, die in zum Teil schematischer Darstellung Ausführungsbeispiele enthält, näher erläutert. Es zeigen

Figur 1 einen Querschnitt durch den Randbereich einer Flüssigkristallzelle,

Figur 2 verschiedene Schritte eines ersten Herstellverfahrens und

Figur 3 verschiedene Schritte eines zweiten Herstellverfahrens.

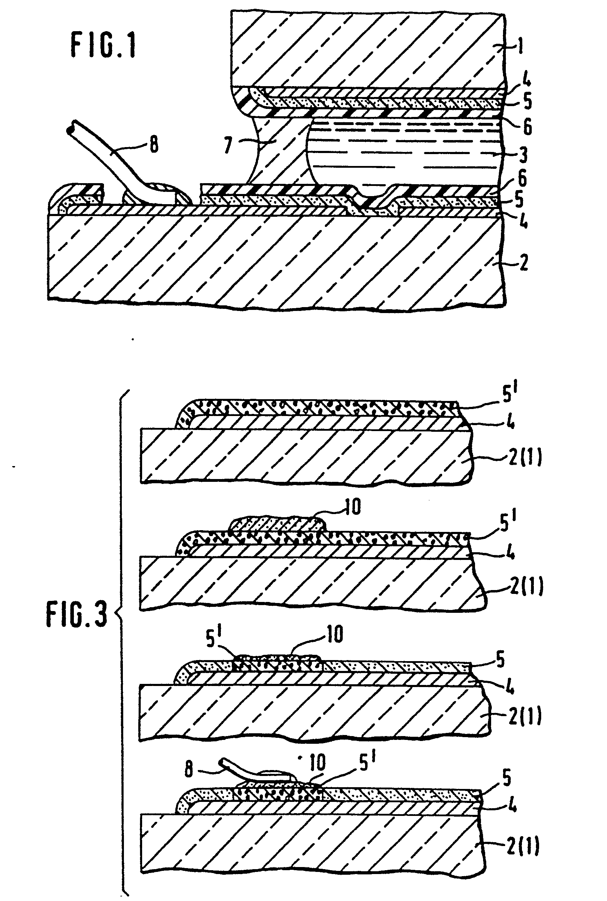

Die Flüssigkristallzelle nach Figur 1 besteht aus zwei Glassubstraten 1 und 2, die mit Abstand zueinander angeordnet sind und zwischen sich eine Flüssigkristallsubstanz 3 aufnehmen. Auf den der Flüssigkristallsubstanz 3 zugewandten Flächen der Glassubstrate 1 und 2 ist jeweils eine elektrisch leitfähige Schicht 4, die aus Indium-Zinn-Oxyd bestehen kann, aufgebracht. Auf dieser befindet sich eine Isolierschicht 5, die aus Siliziumdioxyd bestehen kann, und auf dieser eine Orientierungsschicht 6, die beispielsweise aus Polyimid bestehen kann. Beide Glassubstrate 1 und 2 mit den darauf angeordneten Schichten stehen über einen Glaslotverschluß 7 oder durch einen Klebverschluß miteinander in Verbindung.

Zum Anschluß der verschiedenen Steuerleitungen 8 an der Flüssigkristallzelle sind an einer außerhalb der Glaslotverbindung 7 liegenden Stelle die Orientierungsschicht 6 und die Isolierschicht 5 entfernt. Auf der dann freiliegenden leitenden Schicht 4 sind dann die Anschlußdrähte 8 angelötet. Die Entfernung der Orientierungsschicht macht hierbei im allgemeinen keinerlei Schwierigkeiten, während der Entfernung der Isolierschicht 5 die oben beschriebenen Nachteile innewohnen, sofern diese Schicht mit den bekannten Verfahren entfernt wird.

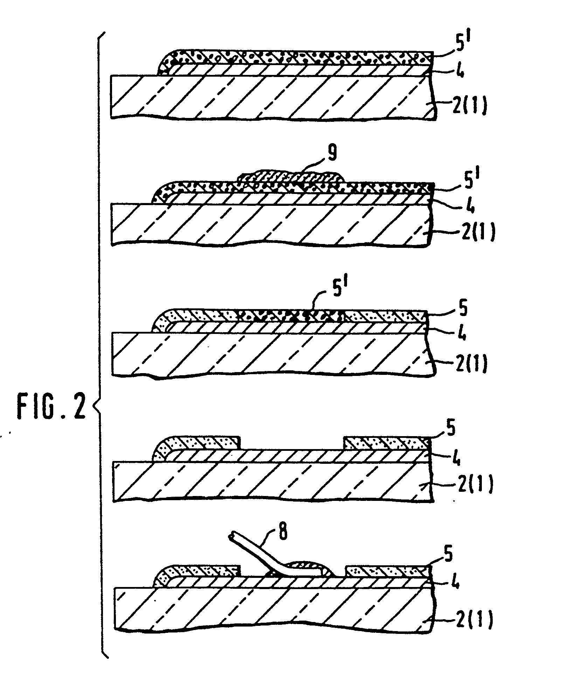

Die Entfernung der Isolierschicht 5 kann nun nach dem erfindungsgemäßen Verfahren wie aus Figur 2 ersichtlich dadurch erfolgen, daß auf die nach dem kurzen Trockenprozeß noch poröse Isolierschicht 5' eine während des Einbrennprozesses verdampfende organische Substanz 9 aufgebracht wird. Während des Einbrennprozesses können die Dämpfe dieser Substanz 9 in die Poren der Isolierschicht 5' eindringen, so daß am Ende des Einbrennprozesses im Bereich der aufgebrachten Substanz 9 die Isolierschicht 5 porös geblieben ist, während außerhalb dieses Bereichs die Isolierschicht sich geschlossen hat und damit eine starke Haftung auf der darunterliegenden leitenden Schicht 4 erhält.

Durch einen Ultraschall-Reinigungsprozeß kann anschließend das poröse Material ohne Schwierigkeiten entfernt werden, so daß anschließens an den Reinigungsprozeß der Anschließdraht 8 auf die elektrisch leitende Schicht 4 aufgelötet werden kann.

Als verdampfende oder verbrennende organische Substanz kann Nitrozellulose verwendet werden.

Bei dem in Figur 3 dargestellten Verfahren wird die Isolierschicht örtlich nicht entfernt, sondern vielmehr mit einer leitenden Brücke versehen. Zu diesem Zweck wird auf die einem kurzen Trockenprozeß unterworfene, poröse Isolierschicht 5' eine Dimethylgoldhalogenid-Substanz 10, beispielsweise Dimethylgoldcholorid, Dimethylgoldbromid oder auch Dimethylgoldzyanid, oder eine andere Dimethylmetallhalogenid-Substanz aufgebracht, die in die Poren der Isolierschicht 5' diffundiert. Nach dem Eindiffundieren dieser Substanz in die poröse Isolierschicht 5 wird das Substrat einem Einbrennprozeß unterworfen, was zur Folge hat, daß die Isolierschicht 5 bis auf den Bereich mit dem eindiffundierten leitenden Material aushärtet und sich fest mit der darunterliegenden leitfähigen Schicht 4 verbindet.

Auf die leitende Substanz 10 kann nunmehr der Anschlußdraht 8 aufgelötet werden. Da die leitfähige Substanz in ihrem Außenbereich in der verfestigten Isolierschicht 5 verankert ist, ist mit einem Herausbrechen der leitfähigen Substanz aus der Isolierschicht nur bei einer im Normalbetrieb nicht vorkommenden überhöhten mechanischen Beanspruchung der Lötstelle zu rechnen.

## Patentansprüche

1. Verfahren zum Herstellen elektrooptischer Anzeigeelemente, insbesondere von Flüssigkristalldisplays, bei dem auf ein Glassubstrat eine elektrisch leitfähige Schicht und darauf eine Isolierschicht aufgebracht wird, die zuerst einem Trockenprozeß und anschließend einem Einbrennprozeß unterworfen wird und die im Bereich von Kontaktierungsstellen der leitfähigen Schicht zur Ermöglichung dieser Kontaktierung behandelt wird, dadurch gekennzeichnet, daß nach dem Trockenprozeß im Bereich der Kontaktierungsstellen auf die Isolierschicht (5, 5') eine sich unter Wärmeeinwirkung zersetzende Substanz (9, 10) aufgebracht wird, die mindestens eine in die Isolierschicht (5, 5') eindringende Zersetzungskomponente aufweist, und danach der Einbrennprozeß durchgeführt wird.

2. Verfahren nach Anspruch 1, dadurch gekennzeichnet, daß als sich zersetzende Substanz eine metallorganische Verbindung (10) aufgebracht wird, von der mindestens eine Metallkomponente in die Isolierschicht eindringen kann.

3. Verfahren nach Anspruch 2, dadurch gekennzeichnet, daß eine metallorganische Verbindung (10) mit einer in die Isolierschicht eindringenden lötfähigen Metallkomponente aufgebracht wird.

4. Verfahren nach Anspruch 1, dadurch gekennzeichnet, daß als sich zersetzende Substanz eine organische Verbindung aufgebracht wird, von der mindestens eine Komponente in die Isolierschicht (5, 5') eindringen kann und während des Einbrennprozesses elektrisch leitend wird.

5. Verfahren nach Anspruch 1, dadurch gekennzeichnet, daß eine während des Einbrennprozesses zumindest teilweise verdampfende oder verbrennende organische Substanz (9) aufgebracht wird und nach dem Einbrennprozeß die mit der Zersetzungskomponente versehene Isolierschicht (5, 5') entfernt wird.

6. Verfahren nach Anspruch 5, dadurch gekennzeichnet, daß eine rückstandsfrei verdampfende oder verbrennende organische Substanz aufgebracht wird.

7. Elektrooptisches Anzeigeelement, insbesondere Flüssigkristalldisplay, mit zwei mit Abstand zueinander angeordneten Glassubstraten, auf denen sich jeweils eine elektrisch leitfähige Schicht, eine Isolierschicht und gegebenenfalls eine Orientierungsschicht und zwischen denen sich eine Flüssigkeit mit sich im elektrischen Feld ausrichtenden Kristallen befindet, sowie mit mit Kontaktierungsstellen der leitfähigen Schicht in Verbindung stehenden elektrischen Anschlußelementen, dadurch gekennzeichnet, daß im Bereich jeder Kontaktierungsstelle die Poren der Isolierschicht (5, 5') mit einer elektrisch leitfähigen Zersetzungskomponente einer unter Wärmeeinwirkung zersetzlichen Substanz (10) gefüllt sind, die einerseits mit der Kontaktierungsstelle und andererseits mit dem Anschlußelement (8) in Verbindung steht.

8. Anzeigeelement nach Anspruch 7, dadurch gekennzeichnet, daß die zersetzliche Substanz (10) aus einem Dimethylgoldhalogenid besteht.

**Claims**

1. Method for the production of electrooptical display elements, especially liquid-crystal displays, wherein an electrically conductive layer is applied to a glass substrate and an insulating layer is arranged thereon which is subjected first to a drying process and then to a baking process and which is treated in the region of contacting points of the conductive layer for the purpose of making this contacting possible, characterised in that after the drying process there is applied to the insulating layer (5, 5') in the region of the contacting points a substance (9, 10) which decomposes under the action of heat and which includes at least one decomposition component penetrating into the insulating layer (5, 5'), and thereafter the baking process is carried out.

2. Method according to claim 1, characterised in that as a decomposing substance there is applied an organo-metallic compound (10) whereof at least one metal component can penetrate into the insulating layer.

3. Method according to claim 2, characterised in that an organo-metallic compound (10) having a solderable metal component penetrating into the insulating layer is applied.

4. Method according to claim 1, characterised in that as a decomposing substance there is applied an organic compound whereof at least one component can penetrate into the insulating layer (5, 5') and becomes electrically conductive during the baking process.

5. Method according to claim 1, characterised in that an organic substance (9) is applied which burns or evaporates at least partly during the baking process, and after the baking process the insulating layer (5, 5') provided with the decomposition component is removed.

6. Method according to claim 5, characterised in that an organic substance is applied which burns or evaporates without residue.

7. Electrooptical display element, especially a liquid-crystal display, with two glass substrates arranged at a spacing from one another and on each of which there is arranged an electrically conductive layer, an insulating layer, and possibly an orientation layer, and between which a liquid is arranged having crystals which align themselves in the electrical field, also with electrical terminal elements connecting with contacting points of the conductive layer, characterised in that in the region of each contacting point the pores of the insulating layer (5, 5') are filled with an electrically conductive decomposition component of a substance (10) decomposable under the action of heat, which is connected on the one hand with the contacting point and on the other hand with the terminal element (8).

8. Display element according to claim 7, characterised in that the decomposable substance (10) consists of a dimethyl gold halide.

**Revendications**

1. Procédé de fabrication d'éléments indicateurs électro-optiques, notamment de dispositifs d'affichage à cristaux liquides, dans lequel on dépose sur un substrat en verre une couche électriquement conductrice et sur celle-ci une couche isolante qui est soumise d'abord à un séchage, puis à une cuisson et qui est traitée dans la région des emplacements de formation de contacts afin de permettre d'établir ces contacts, procédé caractérisé en ce que, après le séchage, on dépose sur la couche isolante (5, 5'), à l'emplacement des surfaces de mise en contact, une substance (9, 10) qui se décompose sous l'action de la chaleur et contient au moins un composant formé par décomposition et pénétrant dans cette couche isolante (5, 5'), puis on exécute la cuisson.

2. Procédé selon la revendication 1, caractérisé en ce que la matière décomposable appliquée est un compose organo-métallique (10) dont au moins un composant métallique peut pénétrer dans la couche isolante.

3. Procédé selon la revendication 2, caractérisé en ce que l'on applique un composé organo-métallique (10) comportant un composant métallique soudable qui pénètre dans la couche isolante.

4. Procédé selon la revendication 1, caractérisé en ce que la substance décomposable appliquée est un composé organique, dont au moins un composant peut pénétrer dans la couche isolante (5,5') et devient électriquement conducteur pendant la cuisson.

5. Procédé selon la revendication 1, caractérisé en ce que l'on applique une substance organique (9) qui se vaporise ou se calcine au moins partiellement pendant la cuisson et, après cette cuisson, on enlève la couche isolante (5, 5') contenant le composant formé par décomposition.

6. Procédé selon la revendication 5, caractérisé en ce que l'on applique une matière organique qui se vaporise ou se calcine sans laisser de résidu.

7. Elément indicateur électro-optique, notamment dispositif d'affichage à cristaux liquides, comportant, d'une part deux substrats de verre, qui sont disposés à une certaine distance l'un de l'autre, sur chacun desquels se trouvent une couche électriquement conductrice, une couche isolante et, le cas échéant, une couche d'orientation et entre lesquels se trouve un liquide comportant des cristaux qui s'orientent dans un champ électrique, et d'autre part des éléments de jonction connectés à des emplacements de mise en contact de la couche conductrice, élément indicateur caractérisé en ce que, dans la région de chaque emplacement de mise en contact, les pores de la couche isolante (5, 5') sont remplis d'un composant électriquement conducteur formé par la décomposition d'une substance (10) décomposable sous l'action de la chaleur, qui est en liaison, d'une part avec l'emplacement de mise en contact et d'autre part avec l'élément de jonction (8).

8. Elément indicateur selon la revendication 7, caractérisé en ce que la substance décomposable est un halogénure de diméthyl-or.

FIG.1

FIG.3

FIG. 2